# EUROPÄISCHE PATENTSCHRIFT

(11) **EP 0 818 360 B1**
(45) Veröffentlichungstag und Bekanntmachung des Hinweises auf die Patenterteilung: **18.04.2001**
(21) Anmeldenummer: 97111533.2
(22) Anmeldetag: 08.07.1997
(51) Int. Cl.: B60R 21/20

(54) **Knie-Rückhalteeinrichtung für Fahrzeuge**
Knee bolster for a vehicle
Dispositif de protection des genoux dans un véhicule

(30) Priorität: 08.07.1996 DE 29611869 U
(43) Veröffentlichungstag der Anmeldung: 14.01.1998
(73) Patentinhaber: TRW Occupant Restraint Systems GmbH & Co. KG, 73551 Alfdorf (DE)
(72) Erfinder: Specht, Martin, 82340 Feldafing (DE); Schröter, Rainer, 85293 Reichertshausen (DE)
(74) Vertreter: Degwert, Hartmut, Dipl.-Phys.

(56) Entgegenhaltungen:
- EP-A- 0 684 164
- DE-A- 2 008 225
- DE-A- 2 063 478
- DE-A- 3 908 713
- GB-A- 2 263 671
- US-A- 5 458 366
- PATENT ABSTRACTS OF JAPAN vol. 018, no. 245 (M-1603), 11.Mai 1994 & JP 06 032195 A (NISSAN MOTOR CO LTD), 8.Februar 1994,

## Beschreibung

Die Erfindung betrifft eine Knie-Rückhalteeinrichtung für Fahrzeuge, mit einer Kniefängerplatte, die in Richtung der Knie eines Fahrzeuginsassen bewegbar ist.

Die durch ein aufblasbares Gaskissen in einem Fahrzeug erreichbare Rückhaltewirkung bei einem Fahrzeugaufprall ist unzureichend, wenn nicht der Körper des Fahrzeuginsassen zusätzlich durch einen angelegten Sicherheitsgurt oder durch ein Kniepolster zurückgehalten wird. Da durch starr im Fahrzeug eingebaute Kniepolster die Bewegungsfreiheit eingeschränkt wird, wurden bewegliche Kniepolster entwickelt, die bei einem Frontalaufprall des Fahrzeugs durch einen plötzlich aufgeblasenen Gassack in Richtung der Knie des Fahrzeuginsassen verlagert werden. Eine Knie-Rückhalteeinrichtung dieser Art ist beispielsweise in der DE 39 08 713 A1 beschrieben. Bei einer weiteren, in der EP 0 684 164 A1 beschriebenen gattungsgemäßen Knie-Rückhalteeinrichtung wird eine in den unteren Teil des Armaturenträgers lösbar eingesetzte Kniefängerplatte, die über flexible Wandungsteile an eine starr innerhalb des Armaturenträgers angeordnete Konsole angeschlossen ist, durch die von einem Gasgenerator erzeugten Druckgase, die in die von der flexiblen Wandung umschlossene Kammer eingeleitet werden, gegen die Knie des Fahrzeuginsassen getrieben.

Derartige Knie-Rückhalteeinrichtungen sind in die Konstruktion des Armaturenträgers integriert und können nicht optional vorgesehen werden.

Aus der DE 2 063 478 A ist eine Knierückhalteeinrichtung für Fahrzeuge bekannt, die eine an die Kontur des unteren Teils eines Armaturenträgers ansetzbare Grundplatte mit einer Öffnung zur Verbindung mit einer im Armaturenträger angeordneten Gasquelle und eine im Ruhezustand gefaltete Wandung aus flexiblem Material umfaßt, die entlang einem geschlossenen Rand mit der Grundplatte verbunden ist.

Durch die Erfindung wird eine Knie-Rückhalteeinrichtung für Fahrzeuge geschaffen, die bei Bedarf auf vorhandene Konstruktionen von Armaturenträgern aufgesetzt werden kann. Durch eine solche Knie-Rückhalteeinrichtung können Fahrzeuge, die für Länder mit Gurtanlegepflicht entworfen wurden und daher keine Knie-Rückhalteeinrichtung benötigen, für Länder ohne Gurtanlegepflicht (USA) mit einer optimalwirksamen Knie-Rückhalteeinrichtung ausgestattet werden. Gemäß der Erfindung enthält diese Knie-Rückhalteeinrichtung eine an die Kontur des unteren Teils eines Armaturenträgers ansetzbare Grundplatte mit wenigstens einer Öffnung zur Verbindung mit einer im Armaturenträger angeordneten Gasquelle sowie eine im Ruhezustand zwischen der Grundplatte und der Kniefängerplatte gefaltete Wandung aus flexiblem Material, die entlang einem ersten geschlossenen Rand mit der Grundplatte und entlang einem zweiten geschlossenen Rand mit einem abtrennbaren außeren, an die Kniefängerplatte angeschlossenen Umfangsrand der Grundplatte verbunden ist. Die Grundplatte schmiegt sich an den unteren Bereich des bestehenden Armaturenträgers an und kann bedarfsweise auf diesen aufgesetzt werden. Im Ruhezustand haben Grundplatte, Kniefängerplatte und die dazwischen gefaltet angeordnete Wandung aus flexiblem Material eine geringe Bauhöhe, so daß die Bewegungsfreiheit im Knieraum kaum eingeschränkt wird.

Bei der bevorzugten Ausführungsform ist die Wandung aus flexiblem Material durch einen Gassack gebildet, dessen Einblasöffnung durch die Öffnung in der Grundplatte an die Gasquelle angeschlossen ist. Zur Realisierung der Knie-Rückhalteeinrichtung kann somit auf bewährte Gassack-Technik zurückgegriffen werden. Die Anbindung des Gassacks an die Grundplatte einerseits und an die Kniefängerplatte andererseits ist unproblematisch, weil große Befestigungsflächen zur Verfügung stehen, über welche die auftretenden hohen Beanspruchungen gut verteilt werden.

Weitere Merkmale und Vorteile der Erfindung ergeben sich aus der folgenden Beschreibung mehrerer Ausführungsformen und aus der Zeichnung, auf die Bezug genommen wird. In der Zeichnung zeigen:
- Fig. 1: eine Perspektivansicht des vorderen Innenraums eines Fahrzeugs mit einer auf dem unteren Teil des Armaturenträgers aufgesetzten Knie-Rückhalteeinrichtung im Ruhezustand;
- Fig. 2: eine perspektivische Schnittansicht des unteren Teils des Armaturenträgers mit der Knie-Rückhalteeinrichtung;
- Fig. 3: eine Perspektivansicht entsprechend Fig. 1, jedoch bei aktivierter Knie-Rückhalteeinrichtung;
- Fig. 4: eine Schnittansicht einer weiteren Ausführungsform der Knie-Rückhalteeinrichtung.

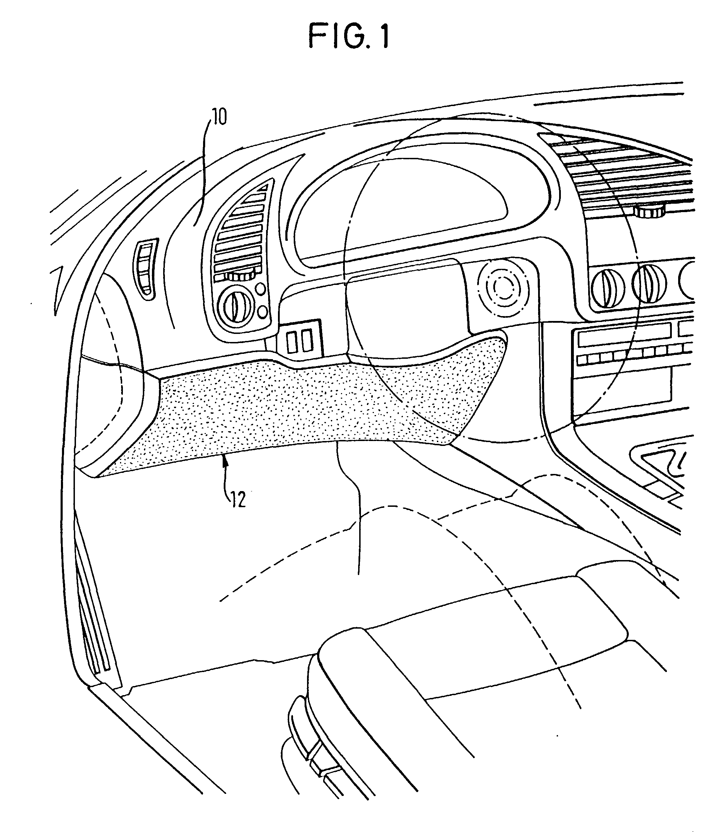

In Fig 1 ist im vorderen Innenraum eines Fahrzeugs ein Armaturenträger 10 zu erkennen, auf dessen unteren Teil die erfindungsgemäß ausgebildete Knie-Rückhalteeinrichtung 12 aufgesetzt ist. Die Figur zeigt anschaulich, wie sich diese Knie-Rückhalteeinrichtung 12 an die Kontur des Armaturenträgers anschmiegt. Sie ist insgesamt sehr flach ausgebildet, so daß der Knieraum für den Fahrzeuginsassen kaum eingeschränkt wird.

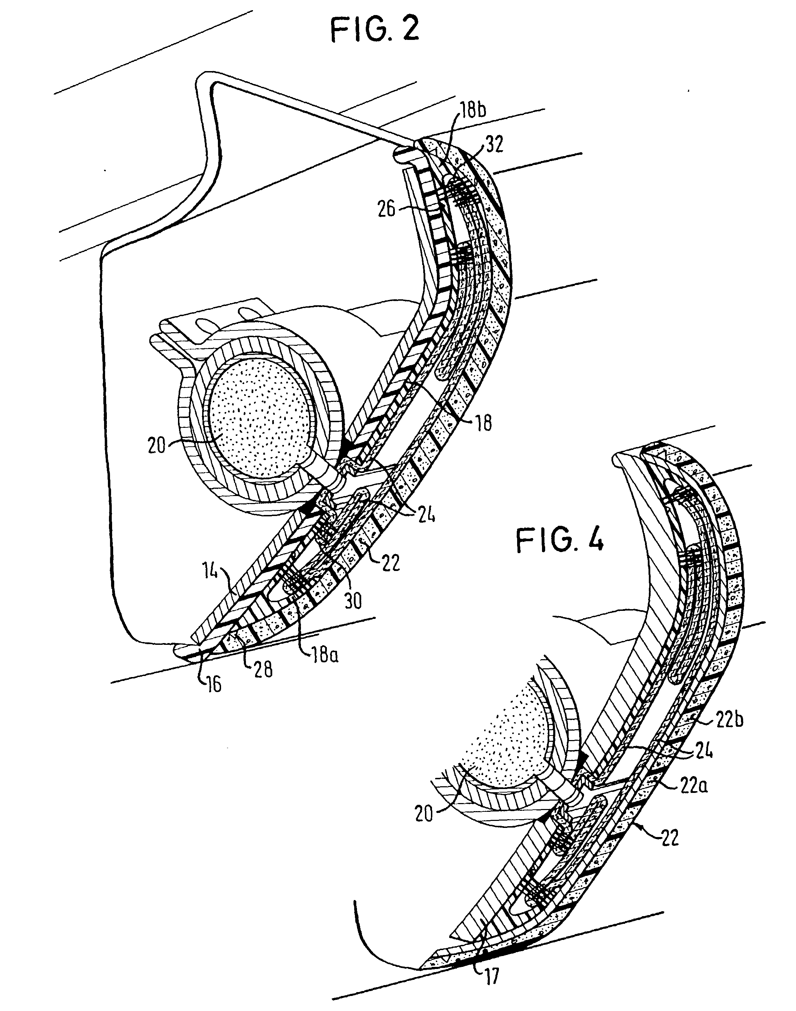

Fig. 2 zeigt den Aufbau der Knie-Rückhalteeinrichtung. Der Armaturenträger 10 ist innenseitig durch ein Verstärkungsblech 14 verstärkt, auf das eine Platte 16 aus geschäumtem Kunststoff aufgesetzt ist. Auf diese Platte 16 ist eine Grundplatte 18 in Form eines Extruderprofils aus Kunststoff angeschmiegt. Das Verstärkungsblech 14, die Platte 16 und die Grundplatte 18 sind mit übereinanderliegenden Öffnungen zum Anschluß an eine im Inneren des Armaturenträgers 10 angeordnete Gasquelle 20 in Form eines pyrotechnischen Gasgenerators versehen. Die Grundplatte 18 ist mit einem äußeren Umfangsrand 18b versehen, der einen unter spitzem Winkel nach vorn umgebogenen Randstreifen 18a aufweist. Auf diesen Randstreifen 18a ist eine Kniefängerplatte 22 aus geschäumtem Kunststoff aufgesetzt. Zwischen dieser Kniefängerplatte 22 und der Grundplatte 18 ist ein Gassack 24 gefaltet aufgenommen. Dieser Gassack 24 ist mit einer Einblasöffnung versehen, die von Wandungsteilen berandet ist, welche durch die Öffnungen in der Grundplatte 18, der Platte 16 und dem Verstärkungsblech 14 hindurch bis an eine Anschlußstelle der Gasquelle 20 herangeführt sind.

Die Grundplatte 18 ist entlang ihrem Außenumfang mit einer Sollbruchlinie 26 versehen. Entlang dieser Sollbruchlinie 26 kann ihr Umfangsrand 18b mit dem Randstreifen 18a von dem übrigen Teil der Grundplatte 18 abgerissen werden.

Die Kniefängerplatte 22 ist ihrerseits entlang ihrem äußeren Umfangsrand mit einer Sollbruchlinie 28 versehen, entlang welcher sie von der Platte 16 abgerissen werden kann, wobei sie jedoch mit dem abgerissenen Randstreifen 18a der Grundplatte 18 verbunden bleibt.

Der Gassack 24 bildet eine flexible Wandung, die mit der Grundplatte 18 und der Kniefängerplatte 22 eine Kammer begrenzt, welche sich beim Einströmen von Druckgas aus der Gasquelle 20 ausdehnt. Entlang einem ersten geschlossenen Rand 30, der durch zwei übereinandergefaltete Lagen des Gassacks 24 gebildet ist, ist letzterer mittels einer Mehrfach-Naht an der Grundplatte 18 festgelegt. Dieser erste Rand 30 wird von einem zweiten Rand 32 des Gassacks 24 umgeben, der ebenfalls durch zwei aufeinandergefaltete Lagen des Gassacks gebildet ist, die durch eine Mehrfach-Naht mit dem abreißbaren Umfangsrand 18b und dem Randstreifen 18a der Grundplatte 18 verbunden sind. Der vordere, innenseitig von dem zweiten Rand 32 des Gassacks 24 gelegene Wandungsteil stützt sich lediglich an der Innenseite der Kniefängerplatte 22 ab.

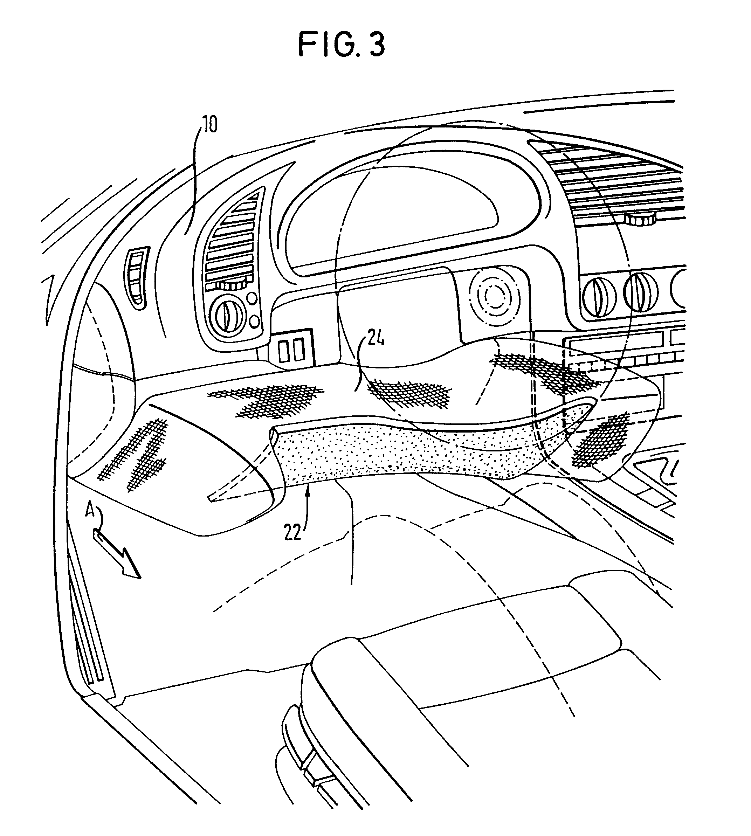

Bei Aktivierung der Gasquelle 20 wird die zwischen der flexiblen Wandung des Gassacks 24, der Kniefängerplatte 22 und der Grundplatte 18 gebildete Kammer mit Druckgas beaufschlagt. Durch den so erzeugten Dehnungsdruck löst sich die Kniefängerplatte 22 entlang der Sollbruchlinie 28 von der Platte 16, und der Umfangsrand 18b der Grundplatte 18 löst sich mit dem Randstreifen 18a entlang der Sollbruchlinie 26 von dem verbleibenden Teil der Grundplatte 18. Die Kniefängerplatte 22 ist nun nur noch durch die flexible Wandung des Gassacks 24 gehalten. Sie entfernt sich von dem Armaturenträger 10 und bewegt sich in Richtung der Knie des Insassen, bis die flexible Wandung des Gassacks 24 zwischen ihren festgelegten Rändern 30, 32 gestreckt ist. Dieser Zustand ist in Fig. 3 dargestellt. Die Kniefängerplatte 22 hat sich in Richtung eines Pfeiles A bis nahe an die Knie des Fahrzeuginsassen heranbewegt; die flexible Wandung des Gassacks 24 ist vollständig entfaltet, so daß die vorverlagerte Kniefängerplatte 22 in ihrer Position stabilisiert wird.

Bei der nun folgenden Vorverlagerung des Fahrzeuginsassen treffen dessen Knie auf die Kniefängerplatte 22. Diese wird durch das im Inneren des Gassacks 24 vorhandene Gaskissen flächig abgestützt, wobei die Abstützkräfte quer zu ihrer Wirkrichtung über die Kniefängerplatte 22 verteilt werden. Die Verteilung der Abstützkräfte quer zu ihrer Wirkrichtung über einen großen Teil der Kniefängerplatte 22 ist von großer Bedeutung, da eine zu starke örtliche Einsenkung der Kniefängerplatte vermieden wird, die für den Oberschenkel des Insassen zu einer festen Abstützstelle würde. Eine solche feste Abstützstelle wirkt wie ein Kugelgelenk und führt zu hohen axialen Beanspruchungen im Oberschenkelknochen.

Die in Fig. 4 dargestellte Ausführungsform unterscheidet sich von der zuvor beschriebenen im wesentlichen nur durch den Aufbau der Kniefängerplatte 22. Diese besteht aus einer innenseitigen Lastverteilerplatte 22a und einer Umschäumung 22b aus Kunststoff. Ferner sind das Verstärkungsblech 14 und die Platte 16 durch eine einteilige Stützwand 17 an der Unterseite des Armaturenträgers ersetzt. Aufbau und Funktion des Gassacks 24 sowie der Grundplatte 18 stimmen mit der zuvor beschriebenen Ausführungsform überein und werden daher nicht erneut beschrieben.

Bei allen Ausführungen kann die Wandung des Gassacks 24 durch andere Befestigungsmittel als Nähte an der Grundplatte 18 bzw. an der Kniefängerplatte 22 festgelegt werden, beispielsweise durch Niete oder eine Klemmverbindung.

## Patentansprüche

1. Knie-Rückhalteeinrichtung (12) für Fahrzeuge, mit einer Kniefängerplatte (22), die in Richtung der Knie eines Fahrzeuginsassen bewegbar ist, gekennzeichnet durch eine an die Kontur des unteren Teils eines Armaturenträgers (10) ansetzbare Grundplatte (18) mit wenigstens einer Öffnung zur Verbindung mit einer im Armaturenträger angeordneten Gasquelle (20) und durch eine im Ruhezustand zwischen der Grundplatte (18) und der Kniefängerplatte (22) gefaltete Wandung (24) aus flexiblem Material, die entlang einem ersten geschlossenen Rand (30) mit der Grundplatte (18) und entlang einem zweiten geschlossenen Rand (32) mit einem abtrennbaren äußeren, an die Kniefängerplatte (22) angeschlossenen Umfangsrand (18a, 18b) der Grundplatte (18) verbunden ist.

2. Knie-Rückhalteeinrichtung nach Anspruch 1, dadurch gekennzeichnet, daß die Wandung (24) aus flexiblem Material durch einen Gassack (24) gebildet ist, dessen Einblasöffnung durch die Öffnung in der Grundplatte (18) an die Gasquelle (20) angeschlossen ist.

3. Knie-Rückhalteeinrichtung nach Anspruch 1 oder 2, dadurch gekennzeichnet, daß der Umfangsrand der Grundplatte (18) einen unter spitzem Winkel zu der Kniefängerplatte (22) hin umgebogenen Randstreifen (18a) aufweist.

4. Knie-Rückhalteeinrichtung nach einem der vorstehenden Ansprüche, dadurch gekennzeichnet, daß die Grundplatte (18) als extrudiertes Profilteil, insbesondere aus Kunststoffmaterial, hergestellt ist.

5. Knie-Rückhalteeinrichtung nach einem der vorstehenden Ansprüche, dadurch gekennzeichnet, daß die Kniefängerplatte (22) die Grundplatte (18) überlappt und im Überlappungsbereich entlang einer Abreißlinie (28) an den Armaturenträger (10) angeschlossen ist.

6. Knie-Rückhalteeinrichtung nach einem der vorstehenden Ansprüche, dadurch gekennzeichnet, daß der Armaturenträger (10) unter der Grundplatte (18) durch ein eingelegtes Verstärkungsblech (14) verstärkt ist.

7. Knie-Rückhalteeinrichtung nach Anspruch 6, dadurch gekennzeichnet, daß zwischen dem Verstärkungsblech (14) und der Grundplatte (18) eine Platte (16) aus geschäumtem Kunststoff eingefügt ist.

8. Knie-Rückhalteeinrichtung nach einem der vorstehenden Ansprüche, dadurch gekennzeichnet, daß die Kniefängerplatte (22) aus geschäumtem Kunststoff gebildet ist.

9. Knie-Rückhalteeinrichtung nach einem der Ansprüche 1 bis 7, dadurch gekennzeichnet, daß die Kniefängerplatte (22) aus einer Lastverteilerplatte (22a) und einer Umschäumung (22b) aus Kunststoff besteht.

## Claims

1. A knee restraining device (12) for vehicles, comprising a knee protector plate (22) adapted to be moved towards the knees of a vehicle occupant, characterized by a base plate (18) adapted to be mounted against the outline of the bottom part of a dashboard (10), having at least one opening for connection with a gas source (20) arranged in the dashboard, and by a wall (24) of flexible material, folded up between the base plate (18) and the knee protector plate (22) in the inactive position, such wall being connected along a first closed rim (30) with the base plate (18) and along a second closed rim (32) with a detachable external peripheral edge (18a, 18b), connected with the knee protector plate (22), of the base plate (18).

2. The knee restraining device as claimed in claim 1, characterized in that the wall (24) of flexible material is formed by a gas bag (24), whose inflation opening is connected with the gas source (20) by means of the opening in the base plate (18).

3. The knee restraining device as claimed in claim 1 or 2, characterized in that the peripheral edge of the base plate (18) has a bent around marginal strip (18a) bent at an acute angle towards the knee protector plate (22).

4. The knee restraining device as claimed in any one of the preceding claims, characterized in that the base plate (18) is produced in the form of an extruded section and more particularly one of plastic material.

5. The knee restraining device as claimed in any one of the preceding claims, characterized in that the knee protector plate (22) overlaps the base plate (18) and is connected with the dashboard (10) along a break line (28) in the overlapping region.

6. The knee restraining device as claimed in any one of the preceding claims, characterized in that the dashboard (10) is reinforced underneath the base plate (18) by a sheet metal reinforcing element (14) placed therein.

7. The knee restraining device as claimed in claim 6, characterized in that a panel (16) of plastic foam material is inserted between the sheet metal reinforcing element (14) and the base plate (18).

8. The knee restraining device as claimed in any one of the preceding claims, characterized in that the knee protector plate (22) is manufactured of plastic foam material.

9. The knee restraining device as claimed in any one of claims 1 through 7, characterized in that the knee protector plate (22) includes a load distributing plate (22a) and a foam casing (22b) of plastic material.

## Revendications

1. Dispositif de retenue pour les genoux (12) dans des véhicules, avec une plaque d'arrêt des genoux (22), qui est mobile en direction des genoux d'un passager du véhicule, caractérisé par une plaque de base (18), que l'on peut mettre sur le contour de la partie inférieure d'un support d'armature (10) et comprenant au moins une ouverture de liaison avec une source de gaz (20) disposée dans le support d'armature, et par une paroi (24) repliée en position de repos entre la plaque de base (18) et la plaque d'arrêt des genoux (22), paroi (24) en une matière flexible, qui est reliée le long d'un premier bord fermé (30) à la plaque de base (18) et le long d'un deuxième bord fermé (32) à un bord périphérique (18a, 18b), extérieur, détachable et raccordé à la plaque d'arrêt des genoux (22), de la plaque de base (18).

2. Dispositif de retenue pour les genoux selon la revendication 1, caractérisé en ce que la paroi (24) en une matière flexible est formée par un sac à gaz (24) dont l'orifice de gonflage est raccordé à travers l'ouverture dans la plaque de base (18) à la source de gaz (20).

3. Dispositif de retenue pour les genoux selon la revendication 1 ou 2, caractérisé en ce que le bord périphérique de la plaque de base (18) présente une bande marginale (18a) qui est repliée en formant un angle aigu en direction de la plaque d'arrêt des genoux (22).

4. Dispositif de retenue pour les genoux selon l'une des revendications précédentes, caractérisé en ce que la plaque de base (18) est fabriquée sous la forme d'une pièce profilée extrudée, en particulier en matière plastique.

5. Dispositif de retenue pour les genoux selon l'une des revendications précédentes, caractérisé en ce que la plaque d'arrêt des genoux (22) chevauche la plaque de base (18) et, dans la zone de chevauchement, est raccordée le long d'une ligne de déchirure (28) au support d'armature (10).

6. Dispositif de retenue pour les genoux selon l'une des revendications précédentes, caractérisé en ce que le support d'armature (10) est renforcé sous la plaque de base (18) par une tôle de renforcement (14) insérée.

7. Dispositif de retenue pour les genoux selon la revendication 6, caractérisé en ce que l'on insère entre la tôle de renforcement (14) et la plaque de base (18) une plaque (16) en matière plastique expansée.

8. Dispositif de retenue pour les genoux selon l'une des revendications précédentes, caractérisé en ce que la plaque d'arrêt des genoux (22) est formée en matière plastique expansée.

9. Dispositif de retenue pour les genoux selon l'une des revendications 1 à 7, caractérisé en ce que la plaque d'arrêt des genoux (22) consiste en une plaque de répartition de la charge (22a) et une mousse d'enrobage (22b) en matière plastique.
